# EUROPEAN PATENT SPECIFICATION

(11) **EP 0 577 567 B1**
(45) Date of publication and mention of the grant of the patent: **08.09.2004**
(21) Application number: 93830230.4
(22) Date of filing: 27.05.1993
(51) Int. Cl.: G05B 19/04

(54) **A configuring device for an electronic micro-controller unit**
Vorrichtung zur Konfigurierung einer elektronischen Mikrocontrollereinheit
Dispositif de configuration pour une unité micro-controlleur électronique

(30) Priority: 03.07.1992 IT MI921635
(43) Date of publication of application: 05.01.1994
(73) Proprietor: BTICINO S.P.A., 20122 Milano (IT)
(72) Inventor: Santini, Ernesto, I-28060 Sozzago - Novara (IT)
(74) Representative: Maggioni, Claudio

(56) References cited:
- EP-A- 0 068 482
- WO-A-87/06975
- NTIS TECH. NOTES March 1990, SPRINGFIELD,VA,USA page 231 , XP000127247 'SIMPLE MULTIPLEXING HAND-HELD CONTROL UNIT'
- PATENT ABSTRACTS OF JAPAN vol. 8, no. 171 (P-293)(1608) 8 August 1984

## Description

The present invention relates to networks of electronic micro-controller units and, more particularly, to a device as defined in the preamble of claim 1 for "configuring" an electronic micro-controller unit, that is to say for assigning it a code which identifies it and distinguishes it from other similar units in a network, or sets it in a predetermined functional mode.

Such a "configuration" operation is necessary in many applications of microprocessors or micro-controllers, in which various electronic units are connected together in a network to interact by the transmission and reception of data on a common line. In practice, it is necessary for the user to set or modify values on each of the electronic micro-controller units of the network to make it possible to unequivocally identify at the micro-controllers the various units, the associated functions and any other parameter which characterises its functions. To this end the circuit interfacing each unit with the network is associated with a device, the so-called configuring device, accessible from outside the unit which is operable to characterise the interface itself, and therefore the unit to which the interface belongs, by means of the opened or closed state of a certain number of contacts or, more generally, by means of a pre-determined configuration of a logic state matrix.

Known devices of this type make use of movable jumpers linear or rotary micro switches coded or otherwise, or of programmable memories. These devices, however, all have at least one of the following disadvantages:
- unclear display of the value set and its associated significance;
- difficulty of setting or modifying by the technically inexpert user;
- high cost;
- large size.

For example, a very widely used configuring device of the rotary microswitch type codes a four bit binary number by a sixteen position switch enclosed in a container of rectangular form of about 10x10x5 mm. This device does not permit a clear display of the values set and its size is relatively large. A similar rotary microswitch in a drum-shaped structure is disclosed in US-A-4243853. Programmable permanent memory configuration devices are more convenient from the point of view of size, especially if the identification code requires a large number of bits, but are relatively expensive and require suitable instrumentation for reading them.

The object of the present invention is to provide a configuration device which has a small size, a very low cost, is easy to set even by inexpert personnel and allows easy and immediate reading of the code set.

This object is achieved by forming the configuration device defined and characterised in general in the claim 1. The invention will be better understood from the following detailed description of an exemplary and therefore in no way limitative embodiment, read in relation to the attached drawings, in which:
Figure 1 shows a block diagram of an electronic micro-controller unit including a configuration device according to the invention;
Figure 2 shows a block diagram of the configuration device according to the invention; and
Figure 3 is a perspective view of two embodiments with a component characteristic of the configuration device according to the invention, and a tool for its manipulation.

The invention is described in relation to a communications system in which various items of electrical apparatus interact with one another by the transmission and reception of data on a single twin wire line to which all are connected in parallel. A system of this type is represented by the assembly of devices of an electrical system of a domestic or industrial environment in which a multiplicity of command, signalling and control devices are connected to a communication line in such a way as selectively to activate electrical or electronic loads also connected to the line. In particular, each device and each load of the system has a associated code which identifies its address, function and operative mode. Command devices themselves, for example, push buttons or sensors and the loads to be controlled, for example, relays or electronic switches for controlling the supply of lamps, are connected to the communication line by means of interface circuits.

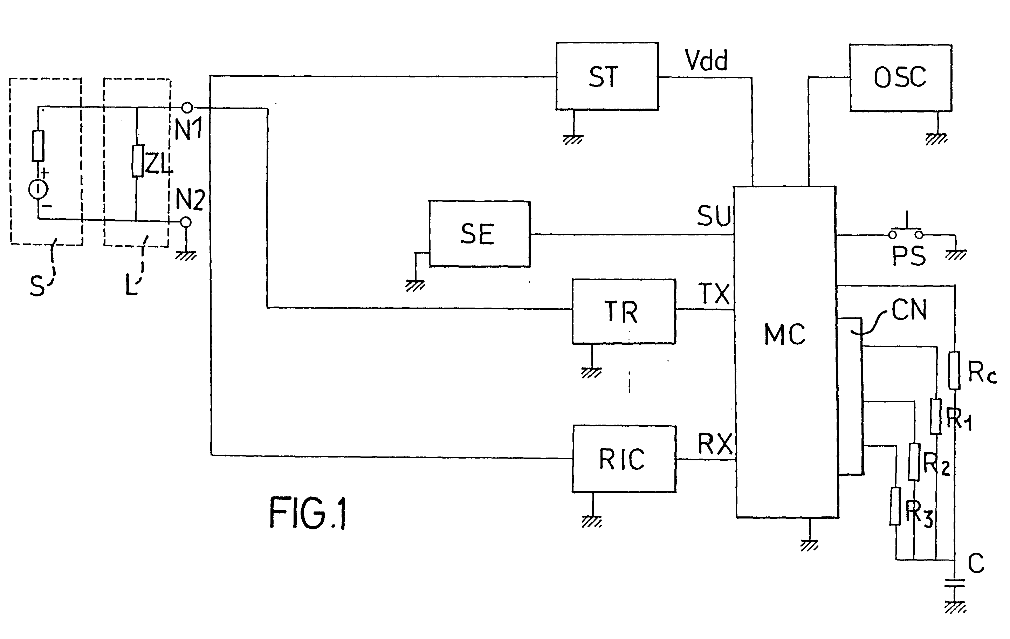

The diagram of Figure 1 shows an interface circuit between a push button PS and a line L which constitutes within the overall assembly, a transmitting station. The line is connected in parallel to a multiplicity of other receiving or transmitting stations, not shown, for a corresponding number of control or load apparatus of an electrical system, each of which has a similar interface circuit. The various interface circuits are supplied via the line L of impedance ZL, from a DC voltage source S.

The interface circuit is connected to the line L by two supply and input/output terminals indicated N1 and N2. It includes a micro-controller MC which is supplied by the source S by means of a supply stage ST generating a stabilized voltage Vdd. The micro-controller MC is connected to a circuit block OSC for setting of the clock frequency, and to a signalling circuit block SE, and has an input terminal RX for serial data coming from the line L via a receiver stage RIC and an output terminal TX for serial data to be output to the line L via a transmission stage TR. It also has a terminal connected to a command device, in this example a push button PS. If, rather than a transmitting station, a receiving station were shown, in place of the push button there would be shown a supply control stage for an electrical load.

According to the invention the micro-controller MC has a plurality of input terminals to which, by means of a suitable connector CN accessible from outside the apparatus, various modular electronic devices can be connected, each having a stable and predetermined electrical characteristic. These can be passive electronic components such as resistors, capacitors and inductors, or more or less complex electronic circuits.

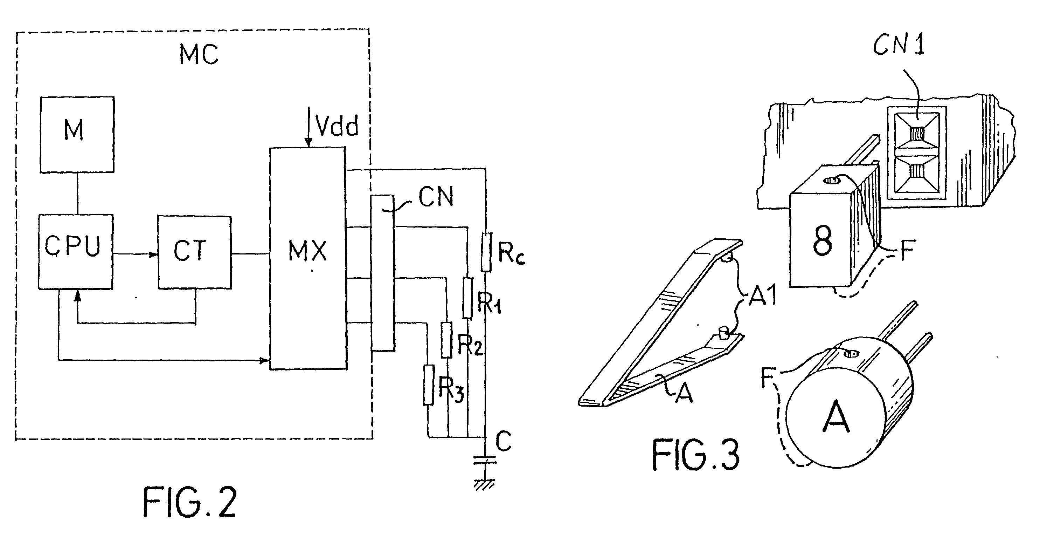

In the example of Figure 1 the modular electronic devices are resistors and the stable and predetermined electrical characteristics are, obviously, the associated resistances. Although in the example there have been shown three configuration or codifying resistors, indicated R1-R3, in practice there could be a different number: in fact this is determined by the number of stations of the network and by the functions which the various stations must perform, as will be more clearly explained hereinbelow. The micro-controller MC is also connected to a reference resistor Rc in series with a capacitor C. This latter is also connected to a common terminal of the resistors R1-R3 and, through its other terminal is connected to ground. These input terminals, as is shown in Figure 2 are connected to a multiplexer MX that is controlled by the central processing unit CPU of the micro-controller MC and is connected to the source ST of stabilised voltage Vdd and to a counter CT. This latter is controlled by the CPU unit and provides at its output the numerical value counted at any one time.

In order to "configure" the electronic micro-controller unit, the resistors R1-R3 are inserted into the connector CN, the values of these resistors being predetermined according to the criteria which will be explained hereinbelow. When the micro-controller is energised, the CPU unit controls the multiplexer MX in such a way as to create connections for charging the capacitor C to the voltage Vdd via the reference resistor Rc, for discharging the capacitor C through the same resistor and, for measuring the discharge time thereof between two predetermined voltage levels, for example between V1 = 4V and a voltage V2 = 2V. This measurement is made by the CPU by starting the count of the counter CT when the voltage across the terminals of the capacitor C is at 4V and stopping it when it is at 2V. The CPU then controls the multiplexer MX in such a way as to create connections for charging the capacitor C to the voltage Vdd via the resistor R1 and in the same way measure its discharge time. The two numbers representing the two discharge times are divided by one another in the CPU and the result is memorized in a memory M. The same operations are performed for the other resistors R2 and R3. The three numbers stored in the memory M together constitute a binary code which uniquely characterises the particular electronic unit and the function which it is intended to perform. This code can be transmitted on the line L via the stage TR or compared with a similar code received via the stage RIC.

Typically, the code contains the address of the transmitting unit, in this case the unit associated with the push button PS, the function of the unit itself, for example the control of the illumination/extinguishing of a lamp, the address of the receiving unit associated with the load to be controlled, for example the lamp to be illuminated or extinguished. For an electrical installation of average dimensions it may be necessary to have up to ten configuration resistors for each electronic unit.

As far as the function of the system as a whole is concerned, in the example shown the actuation of the push button PS starts a programmed cycle of the micro-controller MC, that is to say:
- reading of the identification code and the function associated with it, that is to say reading of the memory M;
- transmission of the code by successive variations of the impedance state of the terminal TX and application to the line L of corresponding pulses in series via the transmission stage TR;
- periodic reading of the logic state of the receiving terminal RX to verify the existence of signals coming from the line;
- comparison of these signals with the transmitted code; and
- activation of the signalling device SE in the case of presence in the received signal of identification and confirmation data confirming that actuation of the electrical load associated with the push button PS has taken place.

The resistors R1-R3 are chosen from a series of resistors of sixteen resistance values spaced at regular intervals from one another, for example R₁ equals open circuit, R₂ equals 820KOhm, R₃ equals 680KOhm ...., R₁₆ equals 2.2KOhm, and the operations of measurement and calculation are performed with a sufficient precision to associate a different 4 bit number to each different resistor as a ratio between the discharge time associated with the resistors R1-R3 and that relating to the reference resistor Rc. Such degree of precision is easily obtained with a normal micro-controller functioning with 8 bit words and utilizing a capacitor having a capacitance of 220nF, and a reference resistor Rc of 3.9KOhm.

With the configuration device according to the invention, a single resistor chosen from 16 available provides information equivalent to that provided by a sixteen position micro switch of the prior art. Since a resistor can easily be made with very small dimensions, a "configuration" modular element can be made in practice with dimensions limited only by the necessity to manipulate the modules themselves and to distinguish between them. It has been found convenient to form the configuration resistors in blocks of insulating plastics material of rectangular shape of about 2.5x10x6mm or in the form of cylinders of 6mm diameter and 5mm in length from which the terminals project from the same face as is shown on an enlarged scale in Figure 3, together with a corresponding connection CN1. The blocks can have projections or recesses or other means which facilitate insertion and removal thereof. In the example shown the blocks have two opposite holes F which can be engaged by corresponding teeth A1 of suitable pincers A. In terms of size, the advantage of the configuration device according to the invention, with respect to that which utilizes micro switches, as can easily be calculated, amounts to a volume of about three times less.

It must furthermore be noted that notwithstanding the reduced dimensions, the individual resistors can be indicated with great clarity for example by an alphabetic or numerical character of 4-5 mm, as is shown in Figure 3 or else with a colour or a combination of colours and therefore in a very much clearer and readable manner than it has been possible to obtain with a device of the prior art where, for example, in the case of a micro switch the value set must be deduced from the angular position of a rotating element with respect to a fixed index. Although only a single embodiment of the invention has been described and illustrated it is clear that numerous variations and modifications can be thought up within the scope of the inventive concept. For example, rather than three codifying resistors, as has already been mentioned, it could be arranged to have more than three depending on the complexity of the system of which the electronic unit forms part, or else, in simpler applications, it could be sufficient to have a single resistor; moreover, the means for measuring and codifying the resistance of the resistors, integrated in the micro controller could include, in place of a counter and a multiplexer, a suitable logic-circuit structure for the analogue-to-digital conversion of the resistances. It is clear, likewise, that if the modular electronic devices were to use electronic components other than resistors or to use complete electronic circuits, the measurement and codifying means could also be significantly different from those utilized in the example described.

## Claims

1. A configuration device of an electronic micro-controller unit connected to other electronic microcontroller units through a common line in a network to interact by the transmission and reception of data on the common line (L), the configuration device comprising means accessible from the outside of the electronic micro-controller unit to set a numerical quantity identifying at least the address and the function of the electronic micro-controller unit, as well as at least one address of another electronic micro-controller unit of the network, said numerical quantity being usable by the electronic micro-controller unit, **characterised in that** said means consist of at least one electrical module (R1-R3) selected from a set of electrical modules having different predetermined stable electrical characteristics and of connection means (CN) for connecting said at least one electrical module (R1-R3) removably to the electronic micro-controller unit (MC), and **in that** it comprises measurement and codification means (Rc,C,Mx,CT,CPU) operable to generate said numerical quantity as a function of the electrical characteristic of the electrical module (R1-R3).

2. A configuration device according to claim 1, **characterised in that** said at least one electrical module is a passive electronic component.

3. A configuration device according to claim 1, **characterised in that** the passive electronic component is a resistor and the predetermined stable, electrical characteristic is the resistance of this resistor.

4. A configuration device according to claim 3, **characterised in that** the measurement and codification means include a reference resistor (Rc), a capacitor (C) and means (MX) for connecting the capacitor (C) to a supply source (Vdd) selectively via the reference resistor (Rc) or via the resistor of predetermined resistance (R1-R3), means (CT) for measuring the discharge time of the capacitor (C) and means (CPU) for comparing the discharge times of the capacitor (C) via the different resistors to provide the said numerical quantity as a result of the comparison.

5. A configuration device according to claim 4, **characterised in that** the means for measuring the discharge time of the capacitor comprise a counter (CT) and means (CPU) controlled by the charge state of the capacitor (C) for starting and stopping the counter.

6. A configuration device according to claim 1, **characterised in that** the electrical module comprises an electronic circuit.

7. A configuration device according to any preceding claim **characterised in that** it includes means (M) for memorising the numerical quantity.

8. A configuration device according to any preceding claim, **characterised in that** said at least one electrical module (R1-R3) is packaged in a block of insulating material from which its electrical terminals project for insertion into said connection means (CN).

9. A configuration device according to claim 8, **characterised in that** said at least one electrical module (R1-R3) has a graphic recognition symbol.

## Patentansprüche

1. Eine Konfigurationsvorrichtung einer elektronischen Mikrosteuerungseinheit, die mit anderen elektronischen Mikrosteuerungseinheiten durch eine gemeinsame Leitung in einem Netzwerk verbunden ist, um durch die Sendung und den Empfang von Daten auf der gemeinsamen Leitung (L) in Wechselwirkung zu stehen, wobei die Konfigurationsvorrichtung eine Einrichtung aufweist, die von der Außenseite der elektronischen Mikrosteuerungseinheit zugreifbar ist, um eine numerische Größe einzustellen, die zumindest die Adresse und die Funktion der elektronischen Mikrosteuerungseinheit identifiziert, sowie zumindest eine Adresse einer anderen elektronischen Mikrosteuerungseinheit des Netzwerks, wobei die numerische Größe durch die elektronische Mikrosteuerungseinheit verwendbar ist, **dadurch gekennzeichnet, daß** die Einrichtung aus zumindest einem elektrischen Modul (R1 - R3), das aus einem Satz von elektrischen Modulen ausgewählt ist, die unterschiedliche vorbestimmte stabile elektrische Charakteristika aufweisen, und aus einer Verbindungseinrichtung (CN) zum Verbinden des zumindest einen elektrischen Moduls (R1 - R3) abnehmbar mit der elektronischen Mikrosteuerungseinheit (MC) besteht, und dadurch, daß dieselbe eine Messungs- und Codifizierungseinrichtung (Rc, C, Mx, CT, CPU) aufweist, die betreibbar ist, um die numerische Größe als eine Funktion der elektrischen Charakteristik des elektrischen Moduls (R1 - R3) zu erzeugen.

2. Eine Konfigurationsvorrichtung gemäß Anspruch 1, die **dadurch gekennzeichnet ist, daß** das zumindest eine elektrische Modul eine passive elektronische Komponente ist.

3. Eine Konfigurationsvorrichtung gemäß Anspruch 1, die **dadurch gekennzeichnet ist, daß** die passive elektronische Komponente ein Widerstand ist und die vorbestimmte stabile elektrische Charakteristik der Widerstandswert dieses Widerstands ist.

4. Eine Konfigurationsvorrichtung gemäß Anspruch 3, die **dadurch gekennzeichnet ist, daß** die Messungs- und Codifizierungseinrichtung einen Referenzwiderstand (Rc), einen Kondensator (C) und eine Einrichtung (Mx) zum Verbinden des Kondensators (C) mit einer Versorgungsquelle (Vdd) selektiv über den Referenzwiderstand (Rc) oder über den Widerstand eines vorbestimmten Widerstandswerts (R1 - R3), eine Einrichtung (CT) zum Messen der Entladungszeit des Kondensators (C) und eine Einrichtung (CPU) zum Vergleichen der Entladungszeiten des Kondensators (C) über die unterschiedlichen Widerstände umfaßt, um die numerische Größe als ein Ergebnis des Vergleichs zu liefern.

5. Eine Konfigurationsvorrichtung gemäß Anspruch 4, die **dadurch gekennzeichnet ist, daß** die Einrichtung zum Messen der Entladungszeit des Kondensators einen Zähler (CT) und eine Einrichtung (CPU), die durch den Ladungszustand des Kondensators (C) gesteuert ist, zu einem Starten und Anhalten des Zählers aufweist.

6. Eine Konfigurationsvorrichtung gemäß Anspruch 1, die **dadurch gekennzeichnet ist, daß** das elektrische Modul eine elektronische Schaltung aufweist.

7. Eine Konfigurationsvorrichtung gemäß einem der vorhergehenden Ansprüche, die **dadurch gekennzeichnet ist, daß** dieselbe eine Einrichtung (M) zum Speichern der numerischen Größe umfaßt.

8. Eine Konfigurationsvorrichtung gemäß einem der vorhergehenden Ansprüche, die **dadurch gekennzeichnet ist, daß** das zumindest eine elektrische Modul (R1 - R3) in einem Block eines isolierenden Materials gehäust ist, von dem die elektrischen Anschlüsse desselben zu einer Einbringung in die Verbindungseinrichtung (CN) vorstehen.

9. Eine Konfigurationsvorrichtung gemäß Anspruch 8, die **dadurch gekennzeichnet ist, daß** das zumindest eine elektrische Modul (R1 - R3) ein graphisches Erkennungssymbol aufweist.

## Revendications

1. Dispositif de configuration d'une unité de microcontrôleur électronique connectée à d'autres unités de microcontrôleur électronique au moyen d'une ligne commune dans un réseau pour interagir par la transmission et la réception de données sur la ligne commune (L), le dispositif de configuration comprenant des moyens accessibles de l'extérieur de l'unité de microcontrôleur électronique pour déterminer une quantité numérique identifiant au moins l'adresse et la fonction de l'unité de microcontrôleur électronique ainsi qu'au moins une adresse d'une autre unité de microcontrôleur électronique du réseau, ladite quantité numérique étant utilisable par l'unité de microcontrôleur électronique, **caractérisé en ce que** lesdits moyens comprennent au moins un module électrique (de R1 à R3) choisi parmi un ensemble de modules électriques ayant des caractéristiques électriques stables prédéterminées différentes et des moyens de connexion (CN) pour connecter de manière amovible ledit au moins un module électrique (de R1 à R3) à l'unité de microcontrôleur électronique (MC), et **en ce qu'**il comprend des moyens de mesure et de codification (Rc, C, Mx, CT, CPU) qui peuvent fonctionner pour produire ladite quantité numérique comme une fonction des caractéristiques électriques du module électrique (de R1 à R3).

2. Dispositif de configuration selon la revendication 1, **caractérisé en ce qu'**au moins un module électrique est un composant électronique passif.

3. Dispositif de configuration selon la revendication 1, **caractérisé en ce que** le composant électronique passif est une résistance et la caractéristique électrique stable prédéterminée est la résistance de la résistance.

4. Dispositif de configuration selon la revendication 3, **caractérisé en ce que** les moyens de mesure et de. codification comprennent une résistance de référence (Rc), une capacité (C) et des moyens (Mx) pour connecter la capacité (C) à une source d'alimentation (Vdd) de manière sélective via la résistance de référence (Rc) ou via la résistance ayant une résistance prédéterminée (de R1 à R3), des moyens (CT) pour mesurer le temps de décharge de la capacité (C) et des moyens (CPU) pour comparer les temps de décharge de la capacité (C) via les différentes résistances pour fournir ladite quantité numérique comme résultat de la comparaison.

5. Dispositif de configuration selon la revendication 4, **caractérisé en ce que** les moyens pour mesurer le temps de décharge de la capacité comprennent un compteur (CT) et des moyens (CPU) contrôlés par l'état de charge de la capacité (C) pour démarrer et arrêter le compteur.

6. Dispositif de configuration selon la revendication 1, **caractérisé en ce que** le module électrique comprend un circuit électronique.

7. Dispositif de configuration selon l'une quelconque des revendications précédentes, **caractérisé en ce qu'**il comprend des moyens (M) pour mémoriser la quantité numérique.

8. Dispositif de configuration selon l'une quelconque des revendications précédentes, **caractérisé en ce que** ledit au moins un module électrique (de R1 à R3) est conditionné dans un bloc d'un matériau isolant duquel ses bornes électriques font saillie pour être insérées dans lesdits moyens de connexion (CN).

9. Dispositif de configuration selon la revendication 8, **caractérisé en ce que** ledit au moins un module électrique (de R1 à R3) a un symbole graphique de reconnaissance.
